# EUROPÄISCHE PATENTSCHRIFT

(11) **EP 1 343 954 B1**
(45) Veröffentlichungstag und Bekanntmachung des Hinweises auf die Patenterteilung: **07.04.2004**
(21) Anmeldenummer: 01271491.1
(22) Anmeldetag: 18.12.2001
(51) Int. Cl.: F02B 39/10, H02K 11/04, F04D 25/06, F04D 29/58

(54) **ELEKTRISCH ANGETRIEBENER STRÖMUNGSVERDICHTER**
ELECTRICALLY DRIVEN FLOW COMPRESSOR
COMPRESSEUR D'ECOULEMENT A ENTRAINEMENT ELECTRIQUE

(30) Priorität: 19.12.2000 DE 10063321
(43) Veröffentlichungstag der Anmeldung: 17.09.2003
(73) Patentinhaber: GFAS mbH Gesellschaft für Aufladetechnik und Spindelbau, 88142 Wasserburg (DE)
(72) Erfinder: BAUKNECHT, Günter, 89073 Ulm (DE); HUBER, Gerhard, 88142 Wasserburg (DE)
(74) Vertreter: Riebling, Peter, Dr.-Ing.
(86) Internationale Anmeldenummer: PCT/EP2001/014940
(87) Internationale Veröffentlichungsnummer: WO 2002/050408

(56) Entgegenhaltungen:
- DE-A- 19 626 213
- US-A- 4 511 312
- US-A- 5 350 039
- US-A- 5 363 674
- US-A- 5 577 883

## Beschreibung

Die Erfindung betrifft einen elektrisch angetriebenen Strömungsverdichter nach dem Oberbegriff des Patentanspruchs **1,** insbesondere für den Einsatz in Verbrennungsmotoren, die mit Abgasturbolader aufgeladen werden.

Bei modernen Verbrennungsmotoren wird zur Leistungssteigerung, zur Verbrauchsund zur Abgasreduzierung oft ein Turbolader eingesetzt. Insbesondere werden heute Dieselmotoren aufgeladen, Nutzfahrzeugdieselmotoren fast ausschließlich, zunehmend ist aber auch das sogenannte Downsizing von Ottomotoren, d. h. kleinerer Motor (Hubraum) bei etwa gleicher Motorleistung, ein wichtiges Thema. Das derzeit gebräuchlichste Verfahren ist die Aufladung mit Abgasturboladern.

Im stationären Betrieb des Verbrennungsmotors arbeitet ein Abgasturbolader im wesentlichen zufriedenstellend. In diesem Betriebszustand erzeugt der Verbrennungsmotor genügend Abgasenergie, um die Abgasturbine und damit den Verdichter des Turboladers antreiben zu können.

Bei einigen Anwendungen, insbesondere bei Ottomotoren mit einem weitgespreizten Drehzahlband, ist ein Überschuß an Abgasenergie vorhanden, der bei ungehinderter Einwirkung auf die Turbine zu einem Überdrehen der Turbinenwelle und/oder unzulässig hohem Ladedruck führen würde. Das gebräuchlichste Verfahren, dies zu verhindern, ist ein vor der Turbine angebrachtes Abblaseuentil, dass in einem Bypass das überschüssige Abgas ungenutzt an der Turbine vorbeileitet. Neuerdings werden auch Leitapparate, wie die variable Turbinengeometrie, eingesetzt. Aber auch damit kann die Abgasenergie nur teilweise ausgenützt werden.

Im nichtstationären Betrieb, d. h. beim Anfahren, Beschleunigen, Bergfahren, Verzögern, Gangwechseln etc., der vorwiegend bei kleinen Drehzahlen des Verbrennungsmotors abläuft, fehlt es an Abgasenergie, um einerseits den Abgasturbolader zu beschleunigen und andererseits genügend Ladedruck zu erzeugen, um den gewünschten Drehmomentüberschuß (z. B. für das Beschleunigen des Fahrzeugs) zu bekommen. Dieser Effekt wird "Turboloch" genannt und ist nur abzumildern durch Reduzierung der "Laufzeugmasse" und der inneren Reibung des Abgasturboladers. Dies führt zwangsläufig zu immer kleineren Ladern mit immer höherer Drehzahl (bis über 200.000 1/min) und wegen der kleineren Strömungsquerschnitte zu immer höheren Strömungsverlusten und damit zu schlechteren Gesamtwirkungsgraden. Deshalb hat der großvolumige Motor bisher immer noch eindeutig Vorteile.

Die bekannten Lösungen, die darauf abzielen, die Verbrennungsmotoren kleiner, leichter und kostengünstiger zu bauen, verwenden einen Abgasturbolader mit einer zusätzlichen elektrischen Maschine, um die Turbine auf Drehzahl zu halten. Derartige Lösungen sind z.B. in der EP 0 352 064 A1, der DE 35 39 782 A1 oder der DE 22 06 450 A1 offenbart.
Eine andere Lösung besteht darin, zusätzlich zum Abgasturbolader einen elektrisch angetriebenen Strömungsverdichter zu verwenden, dessen Antriebseinheit über einen separaten Umrichter mit elektrischem Strom versorgt wird. Dieser Umrichter ist meist groß und schwer. Die Stromversorgung der Antriebseinheit erfolgt dabei über Zuleitungen, die selbst unter aufwendigen Abschirmmaßnahmen elektromagnetische Strahlung (EMV) absondern.

In Verbindung mit anderen Einsatzbereichen sind elektrisch betriebene Kompressoren bekannt, bei denen den Motor und die Steuerelektronik in einem gemeinsamen Gehäuse untergebracht sind.
Eine Flüssigkeitspumpe dieser Art ist in der US 4 511 312 A, die den nächstkommenden Stand der Technik bildet, offenbart. Aus der US 5 577 883 A ist eine Vakuumpumpe bekannt, bei der das äußere Pumpengehäuse durch eine Wasserkühlung gekühlt wird. Eine Kühlung des Motors oder der Elektronik ist nicht beschrieben.
Die US 5 363 674 A offenbart einen Kompressor für ein gasförmiges Kühlmittel, bei dem der Motor innerhalb des Kühlmittelstroms angeordnet ist, und so ein Wärmeaustausch zwischen Motor und Kühlmittel stattfinden kann. Ein eigener Kühlkreislauf für den Motor und dessen Elektronik ist nicht offenbart.
Die US 5 350 039 A lehrt ebenfalls einen Kompressor für ein gasförmiges Kühlmittel, bei dem sowohl der Motor als auch die Elektronik von dem Kühlmittel umströmt werden. Ein eigener Kühlkreislauf und ein gemeinsames Kühlelement für Motor und Elektronik ist nicht vorgesehen.

Die DE 196 26 213 C2 offenbart einen elektrischen Antrieb mit Flüssigkeitskühlung für den Antrieb und die Leistungselektronik. Durch Kühlkanäle, die im Gehäuse und dem Lagerschild integriert sind, wird ein Kühlkreislauf für ein flüssiges Kühlmedium gebildet. Als Nachteil wird hierbei Jedoch gesehen, dass die Herstellung eines Gehäuses bzw. Lagerschildes mit integrierten Kühlkanälen relativ aufwändig ist.

Die Aufgabe der Erfindung liegt darin, einen elektrisch angetriebenen Strörnungsverdichter hinsichtlich seiner Baugröße, seines EMV-Verhaltens, seiner Kühlung und seiner Herstellungskosten zu verbessern.

Diese Aufgabe wird durch die Merkmale des Patentanspruchs 1 gelöst.

Erfindungsgemäß bilden der Umrichter und die elektrische Antriebseinheit eine integrale Anordnung. Der Vorteil dieser Anordnung liegt in der kompakten Bauweise, d. h. In der kompakten Anordnung von Antriebseinheit und Umrichter. Beide Elemente sind örtlich so nahe zusammengebaut, daß sich daraus Vorteile bezüglich der benötigten Baugröße, des EMV-Verhaltens und der Herstellungs- und Wartungskosten ergeben. Durch die integrale Anordnung von Antriebseinhelt und Umrichter ergeben sich auch wesentliche Vorteile in Verbindung mit der Kühlung dieser Bauteile, dadurch, daß zur Kühlung der Leistungselektronik des Umrichters und der Antriebseinheit ein und dasselbe Kühlelement verwendet werden kann. Da die Antriebseinheit eine relativ hohe elektrische Leistungsaufnahme hat, weist diese einen Kühlkreislauf für ein flüssiges Kühlmedium auf. Dabei ist der Umrichter an den Kühlkreislauf der Antriebseinheit angebunden.

Vorteilhaft kann die integrale Anordnung in einem gemeinsamen Gehäuse untergebracht sein.

Als Kühlelement für die Antriebseinheit und die Leistungselektronik des Umrichters wird vorzugsweise die Statorbuchse der Antriebseinheit verwendet, auf deren Stirnseite die Leistungselektronik angeordnet ist. Durch die Anbindung des Umrichters an den Kühlkreislauf des Antriebsmotors ist eine separate Kühlung des Umrichters, z. B. durch Luft oder Flüssigkeit nicht nötig. Der Umrichter kann in demselben Kühlkreislauf wie der Antriebsmotor betrieben werden.

Die Verbindungsleitungen zwischen Antriebseinheit und Umrichter sind vorzugsweise sehr kurz gehalten - z. B. nur wenige Millimeter - und innerhalb des Gehäuses geführt. Dadurch wird von diesen Leitungen nur ein sehr geringer Anteil an elektromagnetischer Strahlung in die Umgebung abgegeben. Dies ist besonders wichtig, da beim Einsatz in Fahrzeugen die Umwelt von dieser Strahlung negativ beeinflußt wird, dies ist insbesondere vor dem Hintergrund der großen Anzahl von Fahrzeugen zu sehen, die besonders in Ballungsräumen zu erheblichen Umweltbelastungen führen.

Eine bevorzugte Ausführungsform sieht vor, daß der Umrichter über Steckverbindungen mit der Antriebseinheit verbunden ist. Damit kann eine komplette Umrichtereinheit aufgesteckt und mit wenigen Befestigungspunkten an der Antriebseinheit angeschlossen werden. Die Verbindung des Umrichters mit der Antriebseinheit kann steckbar erfolgen, wobei Montage und Demontage besonders einfach werden. Auch im Servicefall ist der Austausch des Umrichters auf einfache Weise möglich.

Da die erfindungsgemäße Konfiguration von Antriebseinheit und Umrichter sehr kompakt gebaut ist, wird eine kostengünstige Lösung erzielt. Es entfallen aufwendige zusätzliche Kühlmaßnahmen, Leitungen und separate Gehäuse. Der komplette Umrichter kann in Hybridbauweise und/oder als ASIC realisiert sein.

Vorteilhaft ist auch die Möglichkeit gegeben, als Antriebseinheit einen drei- oder mehrphasigen Motor zu verwenden. Damit kann das Drehmoment erhöht oder die Strombelastung reduziert werden.

Nachfolgend wird die Erfindung anhand eines Ausführungsbeispiels mit Bezugnahme auf zwei Zeichnungsfiguren näher erläutert. Aus den Zeichnungen und der Beschreibung ergeben sich weitere Merkmale, Vorteile und Anwendungen der Erfindung.

Es zeigen:
- Fig. 1:: eine Explosionsdarstellung des erfindungsgemäßen Strömungsverdichters;
- Fig. 2:: einen Längsschnitt durch den Strömungsverdichter.

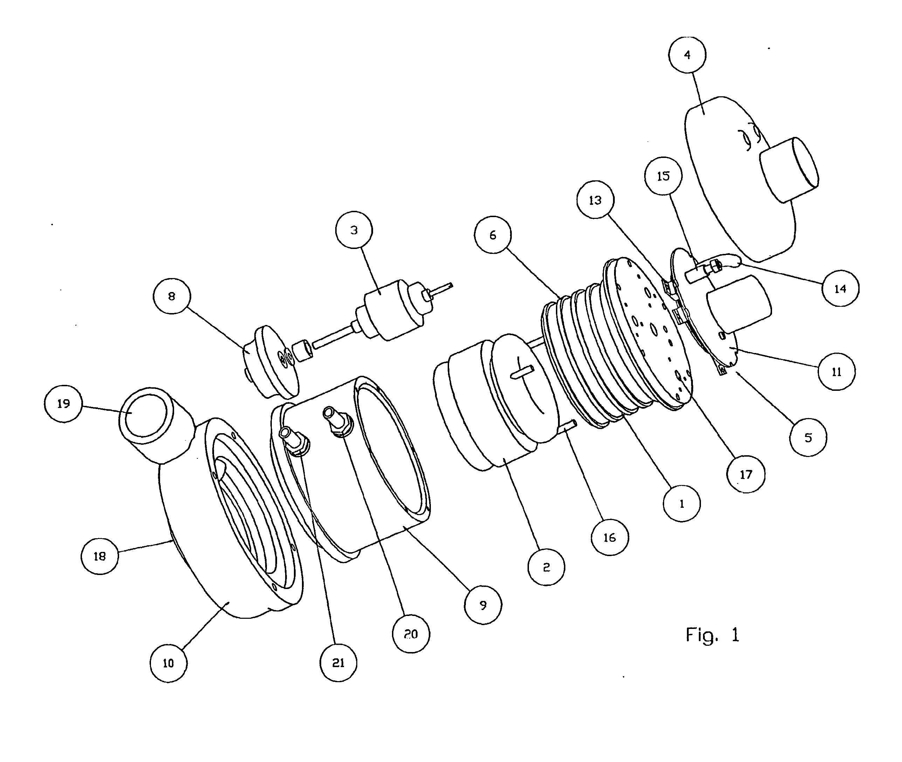

Die Antriebseinheit des in Figur 1 abgebildeten Strömungsverdichters umfaßt einen Stator 2 mit einem mehrphasigen Wicklungspaket mit entsprechenden Wicklungsanschlüssen 16 sowie einen Rotor mit Welle 3, welcher im Stator 2 drehbar angeordnet ist. Die Rotorwelle 3 ist einerseits in einer Statorbuchse 1 gelagert, die den Stator 2 umgibt und andererseits in einem Gehäuse 9, welches den Stator 2 samt Statorbuchse 1 aufnimmt. Die Rotorwelle 3 trägt ferner an einem Ende ein Verdichterrad 8, welches in einem, mit dem Gehäuse 9 verbundenen, Verdichtergehäuse 10 rotiert und arbeitet. Hierzu weist das Verdichtergehäuse einen Verdichtereinlaß 18 sowie einen Verdichterauslaß 19 auf. Auf dem lagerschildseitigen Gehäuseteil der Statorbuchse 1 ist nun erfindungsgemäß die Leistungselektronik 13 des Umrichters 5 montiert und mit der darüberliegenden Steuerelektronik 11 verbunden. Die Leistungstransistoren der Leistungselektronik 13 werden direkt über Durchführungen 17 in der Statorbuchse mit den Wicklungsanschlüssen 16 des Stators 2 verbunden. Somit ist die benötigte Drahtlänge der Zuleitungen, d. h. der Wicklungsanschlüsse, minimal. Der Umrichter 5 muß von außen lediglich an seinem Stromversorgungsanschluß 15 mit einer Gleichspannung des Bordnetzes des Fahrzeuges verbunden werden, deren Zuleitungen keine Wechselstromanteile aufweisen und somit keine schädliche EMV-Abstrahlung haben. Die Steuerfunktionen für den Umrichter 5 werden über eine separate Zuleitung 14 realisiert, die Ein- und Ausgänge darstellen, für die Sollwertvorgabe für Drehzahl oder Strom, Drehzahl-Istwert etc.

Der gesamte Umrichter 5 wird von einer Haube 4 abgedeckt.

Zwischen dem Umfang der Statorbuchse 1 und dem Gehäuse 9 verbleibt ein Hohlraum 7, zur Aufnahme einer Kühlflüssigkeit, die über einen Kühlflüssigkeitseinlaß 20 und einen Kühlflüssigkeitsauslaß 21 in den Hohlraum 7 eingebracht wird und dort zirkuliert. Zur Vergrößerung der Oberfläche und besseren Kühlung kann die Statorbuchse 1 Rippen 6 aufweisen.

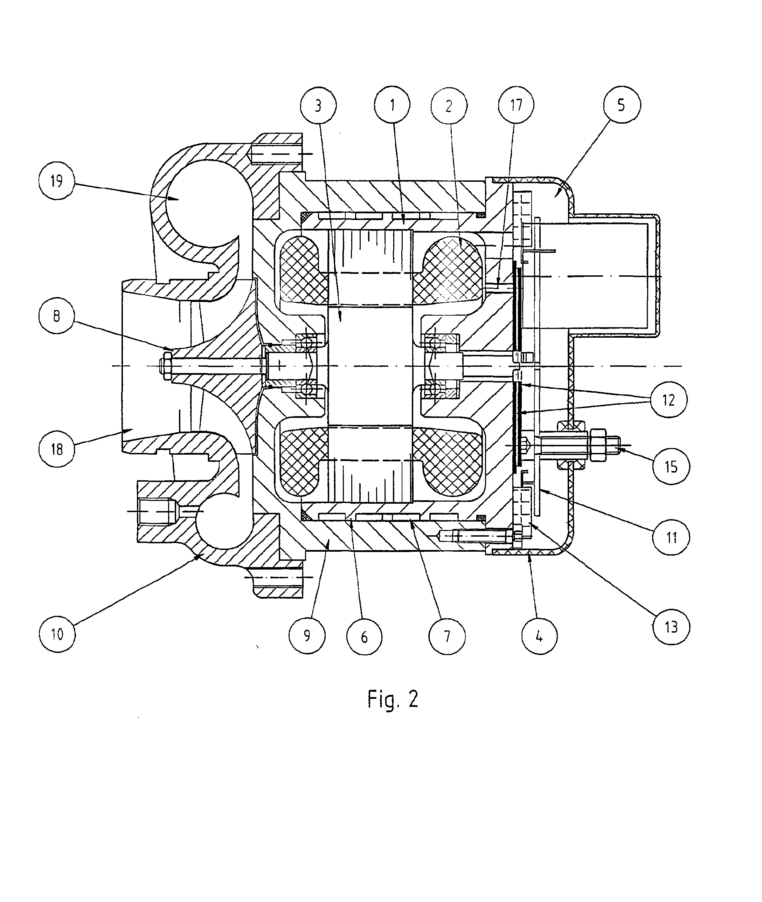

Wie man in Figur 2 sehr gut erkennt, ist die Leistungselektronik 13 direkt auf der Stirnseite der Statorbuchse 1 angeordnet und wärmeleitend mit dieser verbunden, so daß durch die Kühlung der Statorbuchse 1 gleichzeitig die Leistungstransistoren 13 gekühlt werden. Die Statorbuchse 1 bildet das Kühlelement sowohl für die Leistungselektronik 13 des Umrichters 5 als auch für die Antriebseinheit. Die Stromzuführung zu den Leistungstransistoren und über die Durchführungen 17 zu den Wicklungspaketen des Stators 2 erfolgt über Leiterflächen 12 großen Querschnitts, da hier Spitzenströme von 100 oder einigen 100 Ampere auftreten können. Oberhalb der Leistungselektronik 13 ist die Leiterplatte mit der Steuerelektronik 11 angeordnet, wobei der ganz Umrichterblock von einer Haube 4 abgedeckt wird. Somit ist die Antriebseinheit und der Umrichter 5 in einem gemeinsamen Gehäuse untergebracht, so daß zum einen die Leitungswege kurz und die Leitungsverluste gering sind und zum anderen keine, durch den Umrichter 5 hervorgerufene, Störstrahlung nach außen dringen kann.

### Zeichnungslegende

- 1: Statorbuchse
- 2: Stator
- 3: Welle/Rotor
- 4: Haube
- 5: Umrichter
- 6: Rippen
- 7: Hohlraum
- 8: Verdichterrad
- 9: Gehäuse
- 10: Verdichtergehäuse
- 11: Steuerelektronik
- 12: Leiterflächen
- 13: Leistungselektronik
- 14: Steuerleitungen
- 15: Stromversorgungsanschluß
- 16: Wicklungsanschluß
- 17: Bohrung
- 18: Verdichtereinlaß
- 19: Verdichterauslaß
- 20: Kühlflüssigkeitseinlaß
- 21: Kühlflüssigkeitsauslaß

## Patentansprüche

1. Elektrisch angetriebener Strömungsverdichter mit einer Antriebs- und Verdichtereinheit (2, 3, 8, 9) und einem Umrichter (5) zur elektrischen Versorgung und Steuerung der Antriebseinheit (2, 3), wobei der Umrichter (5) und die Antriebseinheit (2, 3) eine integrale Anordnung bilden, die in einem gemeinsamen, aus einem Gehäuse (9), einer Statorbuchse (1) und einer Haube (4) gebildeten Gehäuse untergebracht ist,
**dadurch gekennzeichnet,**
**dass** eine Leistungselektronik (13) des Umrichters (5) auf einem lagerschlldseitigen Gehäuseteil der Statorbuchse (1) montiert ist,
**dass** der Umrichter (5) und die Antriebseinheit (2, 3) durch ein gemeinsames durch die Statorbuchse (1) gebildetes Kühlelement gekühlt werden, und
**dass** die Antriebseinheit (2; 3) einen Kühlkreislauf für ein flüssiges Kühlmedium aufweist, wobei zwischen dem Umfang der Statorbuchse (1) und dem Gehäuse (9) ein Hohlraum (7) zur Aufnahme des Kühlmediums vorgesehen ist, welches um die Statorbuchse (1) zirkuliert.

2. Strömungsverdichter nach Anspruch 1,
**dadurch gekennzeichnet, daß** Verbindungsleitungen (16) zwischen Antriebseinheit (2, 3) und Umrichter (5) Innerhalb des Gehäuses (9) über Durchführungen (17) im lagerschildseitigen Gehäuseteil der Statorbuchse (1) geführt sind.

3. Strömungsverdichter nach einem der vorhergehenden Ansprüche,
**dadurch gekennzeichnet, daß** der Umrichter (5) als kompakte, austauschbare Einheit aufgebaut ist.

4. Strömungsverdichter nach einem der vorhergehenden Ansprüche,
**dadurch gekennzeichnet, daß** der Umrichter (5) über Steckverbindungen mit der Antriebseinheit (2, 3) verbunden ist.

5. Strömungsverdichter nach einem der vorhergehenden Ansprüche,
**dadurch gekennzeichnet, daß** die Antriebseinheit (2, 3) ein drei- oder mehrphasiger Elektromotor ist.

## Claims

1. Electrically driven flow compressor comprising a drive and compressor unit (2, 3, 8, 9) and a converter (5) for the electrical supply and control of the drive unit (2, 3), the converter (5) and the drive unit (2, 3) forming an integral arrangement which is housed in a common housing formed from a housing (9), a stator bush (1) and a hood (4), **characterised in that** power electronics (13) of the converter (5) are mounted on a housing part of the stator bush (1) on the end shield side, **in that** the converter (5) and the drive unit (2, 3) are cooled by a common cooling element formed by the stator bush (1), and **in that** the drive unit (2, 3) has a cooling circuit for a liquid cooling medium, a cavity (7) being provided between the periphery of the stator bush (1) and the housing (9) to receive the cooling medium which circulates around the stator bush (1).

2. Flow compressor according to claim 1, **characterised in that** connecting lines (16) are guided via ducts (17) in the housing part of the stator bush (1) on the end shield side inside the housing (9) between the drive unit (2, 3) and converter (5).

3. Flow compressor according to any one of the preceding claims, **characterised in that** the converter (5) is constructed as a compact, replaceable unit.

4. Flow compressor according to any one of the preceding claims, **characterised in that** the converter (5) is connected to the drive unit (2, 3) via plug-type connections.

5. Flow compressor according to any one of the preceding claims, **characterised in that** the drive unit (2, 3) is a three-phase or multiphase electric motor.

## Revendications

1. Compresseur d'écoulement à entraînement électrique, comprenant une unité d'entraînement et de compression (2, 3, 8, 9) et un convertisseur (5) pour l'alimentation et la commande électriques de l'unité d'entraînement (2, 3), le convertisseur (5) et l'unité d'entraînement (2, 3) formant un dispositif d'une seule pièce qui est logé dans un carter commun formé d'un carter (9), d'un manchon de stator (1) et d'un capot (4), **caractérisé en ce qu'**une électronique de puissance (13) du convertisseur (5) est montée sur une partie de carter du manchon de stator (1) qui est située côté flasque, **en ce que** le convertisseur (5) et l'unité d'entraînement (2, 3) sont refroidis par un élément de refroidissement commun formé par le manchon de stator (1), **et en ce que** l'unité d'entraînement (2 ; 3) comporte un circuit de refroidissement pour un agent réfrigérant liquide, étant précisé qu'il est prévu entre la circonférence du manchon de stator (1) et le carter (9) un espace (7) pour recevoir l'agent réfrigérant qui circule autour dudit manchon (1).

2. Compresseur d'écoulement selon la revendication 1, **caractérisé en ce que** des conducteurs de raccordement (16) prévus entre l'unité d'entraînement (2, 3) et le convertisseur (5), à l'intérieur du carter (9), traversent des passages (17) prévus dans la partie de carter du manchon de stator (1) située côté flasque.

3. Compresseur d'écoulement selon l'une des revendications précédentes, **caractérisé en ce que** le convertisseur (5) est conçu comme une unité compacte échangeable.

4. Compresseur d'écoulement selon l'une des revendications précédentes, **caractérisé en ce que** le convertisseur (5) est relié à l'unité d'entraînement (2, 3) par des connexions enfichables.

5. Compresseur d'écoulement selon l'une des revendications précédentes, **caractérisé en ce que** l'unité d'entraînement (2, 3) est un moteur électrique triphasé ou polyphasé.
